Europäisches Patentamt

(19) European Patent Office

Office européen des brevets

(11) Publication number : **0 215 681 B1**

# (12) EUROPEAN PATENT SPECIFICATION

(45) Date of publication of patent specification :
05.06.91 Bulletin 91/23

(51) Int. Cl.⁵ : **G01T 1/29**

(21) Application number : 86307196.5

(22) Date of filing : 18.09.86

(54) Method for reading radiation image information.

(30) Priority : 18.09.85 JP 207599/85
24.03.86 JP 65351/86

(43) Date of publication of application :
25.03.87 Bulletin 87/13

(45) Publication of the grant of the patent :
05.06.91 Bulletin 91/23

(84) Designated Contracting States :
DE GB NL

(56) References cited :
EP-A- 0 129 801
EP-A- 0 144 963

(73) Proprietor : KONICA CORPORATION
26-2, Nishi-shinjuku 1-chome Shinjuku-ku
Tokyo (JP)

(72) Inventor : Tsuchino, Hisanori
Konishiroku Photo Ind. Co. Ltd. 1 Sakuramachi
Hino-shi Tokyo (JP)
Inventor : Kano, Akiko
Konishiroku Photo Ind. Co. Ltd. 1 Sakuramachi
Hino-shi Tokyo (JP)
Inventor : Nakano, Kuniaki
Konishiroku Photo Ind.Co.Ltd. 1, Sakuramachi
Hino-shi Tokyo (JP)
Inventor : Amitani, Koji
Konishiroku Photo Ind.Co.Ltd. 1, Sakuramachi
Hino-shi Tokyo (JP)
Inventor : Shimada, Fumio
Konishiroku Photo Ind.Co.Ltd. 1, Sakuramachi
Hino-shi Tokyo (JP)

(74) Representative : Ellis-Jones, Patrick George
Armine et al
J.A. KEMP & CO. 14 South Square Gray's Inn
London WC1R 5EU (GB)

## Description

This invention relates to a method for reading radiation image information stored on a radiation image panel, more particularly to a method which reproduces correctly said radiation image.

When radiation is irradiated on a stimulable phosphor, the radiation energy is stored in said phosphor and the stored energy, when excited with, for example visible light, emits fluorescence at an intensity corresponding to the stored energy, as is well known in the art.

By utilizing the above characteristic, there has been proposed a method in which radiation image information, such as of a human body, is stored as the latent image on a radiation image converting panel having a stimulable phosphor layer (hereinafter referred to as a converting panel), said converting panel is scanned with an exciting light, such as a laser beam, to stimulate emission, and the stimulated emission is photo-electrically converted to an image signal, which is then visualized, as disclosed in U.S. Patent 3,859,527 and Japanese Unexamined Patent Publication No. 12144/1980.

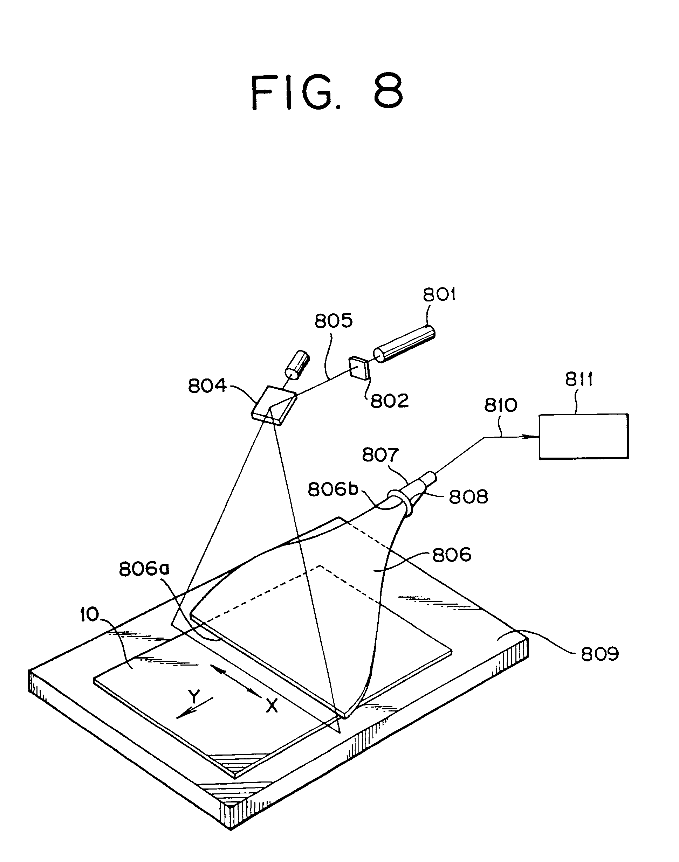

In the following, a radiation image information reading apparatus using a converting panel as mentioned above is described by referring to Fig. 8.

A stimulation laser beam 805 emitted from a laser beam source 801 is reflected against a galvanometer mirror 804, which is vibrated at a certain amplitude, to irradiate the converting panel 10 having a stored latest radiation image.

During this operation, the converting panel 10 is simultaneously moved in the direction perpendicular to the direction of vibration of the laser beam.

Thus, the converting panel 10 is subjected to main scanning in the amplitude direction (X direction) and to subscanning in the Y direction, whereby the whole panel 10 is scanned to effect stimulated emission on the scanning line (a line in the X direction).

There is also provided a condensing member 806 (light collecting member) having a light-receiving surface 806a parallel to and in the vicinity of the scanning line, said condensing member 806 gradually narrowing from the light-receiving surface 806a, which has a slender flat section, until becoming substantially cylindrical at its terminal end, i. e. the transmitting surface 806b which is adjacent to a photodetector (e. g. a photomultiplier tube) 807, with a filter 808 for separation of the stimulated emission from the stimulation laser beam sandwiched therebetween.

The stimulated emission which occurs on the scanning line enters, through the light receiving surface 806a, into the condensing member 806 to reach the transmitting surface 806b, then enters the photodetector 807 where it is photoelectrically concerted and sent to an image display apparatus 811. Image information converted is processed and observed as a visible image by use of a CRT, magnetic tape or light sensitive photographic material.

It should be noted here that, at the light-receiving surface 806a of the condensing member 806, the light from all points within the total reflection angle relative to the light-receiving surface 806a enters the condensing member 806. Thus, not only the stimulated emission stimulated by the laser beam 805 on the scanning line, but also stray light from outside of the apparatus or part of the reflected light of the laser beam from the surface of the converting panel 10 or afterglow, are all picked up and mixed with the stimulated emission carrying the image information, which becomes noise light which disturbs the correct image information.

Of the above noise light, the stray light from outside the apparatus and reflected lase light from the surface of the converting panel 10 can be excluded, for example by means of light shielding or a filter, and therefore the afterglow from the converting panel 10 is the main problem as noise light.

This afterglow includes fluorescence afterglow generated by excitation of the stimulable phosphor of the converting panel with radiation (hereinafter called fluorescent afterglow) and excited emission afterglow generated by exciting the energy stored in the stimulable phosphor by a stimulating ray such as laser beam (hereinafter called stimulation afterglow).

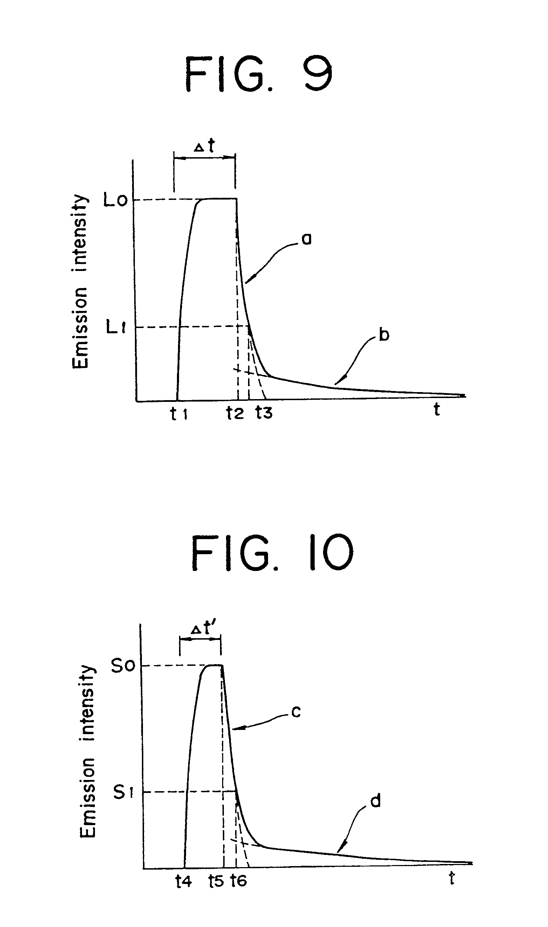

The fluorescent afterglow genarally exhibits and exponentially functional attenuation curve as shown in Fig. 9. That is, if radiation is irradiated for $\Delta t$ time from time t1 to t2 and stopped at t2, the emission intensity Lo is not immediately attenuated to 0. The attenuation differs depending on the phosphor ; the time constant before the emission intensity becomes $l/e$ of its highest value may be $10^{-6}$ second for a tungstic acid salt, while it may be as long as $10^{-3}$ to $10^{-1}$ second for a phosphor containing rare earth element ions or manganese ions. Also, the fluorescent afterglow will frequently have a minor afterglow as represented by curve $\underline{b}$ in Fig. 9 in addition to the major afterglow as represented by curve $\underline{a}$ in the same Figure. The minor afterglow generally has weak emission intensity, but its attenuation time constant is large.

While stimulated emission is emitted from a very small area (corresponding to a picture element or pixel) on which an stimulating ray has been irradiated for a certain time, fluorescent afterglow is emitted from the whole surface on which radiation has been irradiated, and the light from all the points within the total reflection angle relative to the light-receiving surface 806a of the condensing member 806 in Fig. 8 is all condensed.

In this case, since the condensing area of the condensing member 806 is much greater than the stimulated emission area of the converting panel, even if the fluorescent afterglow intensity par one picture element (one pixel) is negligibly small as compared with the stimulated emission intensity, the quantity of fluorescent afterglow is not negligible when transmitted to the photodetector.

For example, if the condensing area of the condensing member is 400 mm × 2 mm and the size of one picture element is 200 μm × 200 μm, the number of picture elements condensed in the condensing member is $2 \times 10^4$. Therefore even if the fluorescent afterglow intensity per one picture element is about $10^{-4}$ of the stimulated emission intensity, the ratio of the fluorescent afterglow to the stimulated emission transmitted to the photodetector is 2 : 1.

Thus, in the radiation image information reading method of the prior art, it is necessary to wait until the fluorescent afterglow intensity becomes sufficiently small after irradiation. Thus it is difficult to read the image information rapidly and continuoulsy in a large amounts. Particularly, this drawback is vital when the time constant of the major afterglow represented by curve a in Fig. 9 is large or when there is a minor afterglow with a large time constant represented by the curve b in the same Figure, even though the time constant of the major afterglow may be small.

On the other hand, the stimulation afterglow is due to the delay in reduction of emission after stopping stimulation with the laser beam ; it has an exponential attenuation curve similar to the fluorescent afterglow, as shown in Fig. 10. This attenuation curve differs depending on the stimulable phosphor, but, for example, if excitation is effected from time t4 to t5 and stopped at t5, attenuation abruptly occurs from the emission intensity So, but later the attenuation rate forms an exponential curve. The stimulation afterglow frequently has a minor afterglow as represented by curve d in Fig. 10 in addition to major afterglow as represented by curve c in the same Figure similarly as for the fluorescent afterglow. The minor afterglow generally has a weak emission intensity, but its attenuation time constant is large.

The stimulation afterglow appears for the first time by irradiation of an stimulating ray. With the progress of scanning by the stimulating ray, the stimulation afterglow intensities of the respective picture elements very depending on the time from irradiation of the exciting light. Therefore the amount of stimulation afterglow transmitted to the photodetector at a gives time is the sum of afterglow amounts in picture elements within the condensing area of the condensing member. For this reason, the stimulation afterglow is negligible when the time constant of attenuation of the stimulation afterglow is sufficiently small relative to the scanning time per picture element of the stimulating ray.

Thus, in the radiation image information reading method of the prior art, when the time constant of the major stimulation afterglow represented by curve c in Fig. 10 is large or when there is a minor stimulation afterglow with a large time constant represented by curve d in the same Figure, even though the time constant of the major stimulation afterglow may be small, a large amount of stimulation afterglow is added to the stimulated emission which becomes a noise component of the radiation image ; it is therefore difficult to read correctly the radiation image information.

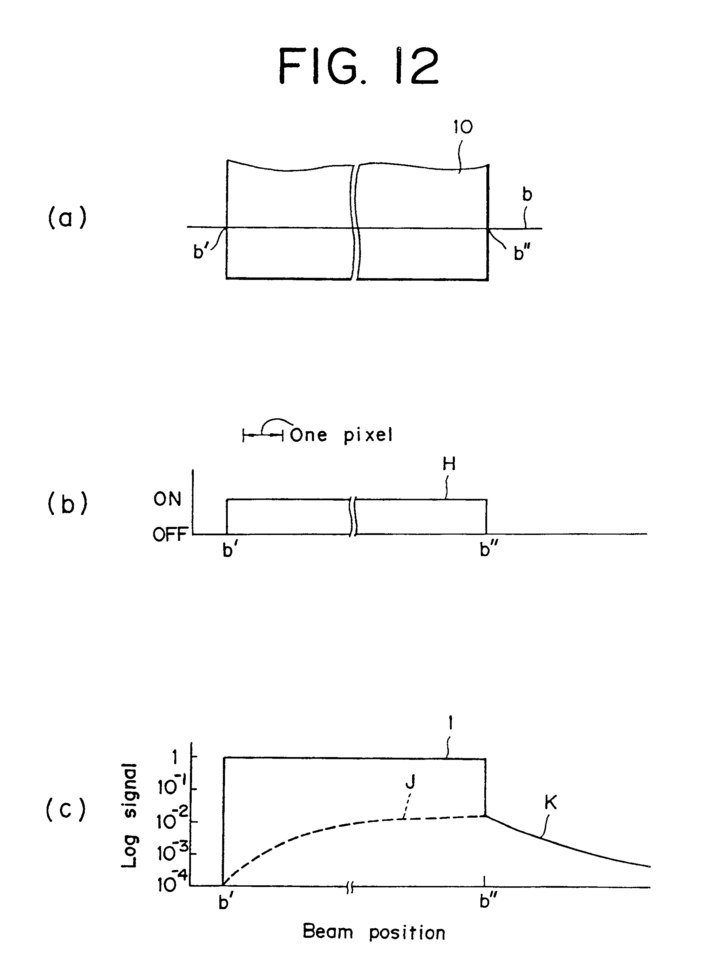

By referring to an example of a converting panel using a thallium-activated rubidium bromide phosphor (RbBr : T1) as the stimulable phosphor this situation is described in detail based on Figs. 12(a)-(c).

Fig. 12(a) shows a converting panel 10 on which radiation has been uniformly irradiated. In the Figure, b represents the scanning line of an exciting light (laser beam). H in the Fig. 12 (b) is the modulation signal of the laser beam and the laser output modulated by said modulation signal. Only one line on the converting panel 10 is irriated with the laser. I in Fig. 12(c) is the signal obtained by photoelectric conversion of stimulated emission and stimulation afterglow generated from the converting panel 10 by a photodetector, and J is a signal corresponding to the stimulation afterglow quantity by stimulation of the phosphor with the stimulating ray. Since the time constant of the stimulation afterglow of RbBr : T1 is several msec, the stimulation afterglow level is gradually elevated with progress of stimulating ray scanning and is gradually reduced as shown by the curve K after completion of stimulation. For this reason, as is also apparent from this Figure, the ratio of the true image signal I not I-J to the signal J corresponding to the stimulation afterglow quantity (SN ratio) deteriorates with the progress of scanning from b' to b", so that the SN ratio is only about 70 : 1 (37 dB) at b" of the converting panel 10.

In the state of the art as described above, methods for improving the drawbacks have been proposed. For example, Japanese Unexamined Patent Publication No. 232337/1984 discloses a method in which an image signal is obtained, which is corrected by detracting the signal corresponding to the afterglow obtained when there is no stimulating ray on the converting panel from the image signal obtained when the stimulation ray is scanning over the converting panel.

However, according to this method, since the tirm in which the signal corresponding to the afterglow can be detected is limited to the time when the stimulation ray is not on the converting panel of the reciprocal major scanning period of the stimulating ray, only one detection is possible for scanning of one line at the maximum, so that no precise correction with respect to the afterglow quantity can be expected.

The noise provided by the fluorescent afterglow incident on the light-receiving surface 806a of the condensing member 806 in Fig. 8 fluctuates from the beginning to the end of subscanning depending on the increase of the surface of the converting panel 10 within the total reflection angle relative to the light-receiving surface 806a and appearance or disappearance of regions with different fluorescent afterglow intensities. Also, the stimulation afterglow incident on the light-receiving surface 806a of the condensing member 806 fluctuates as a matter of course with fluctuation in stimulation emission intensity. This is why the noise light mixed during scanning reading fluctuates during subscanning and main scanning.

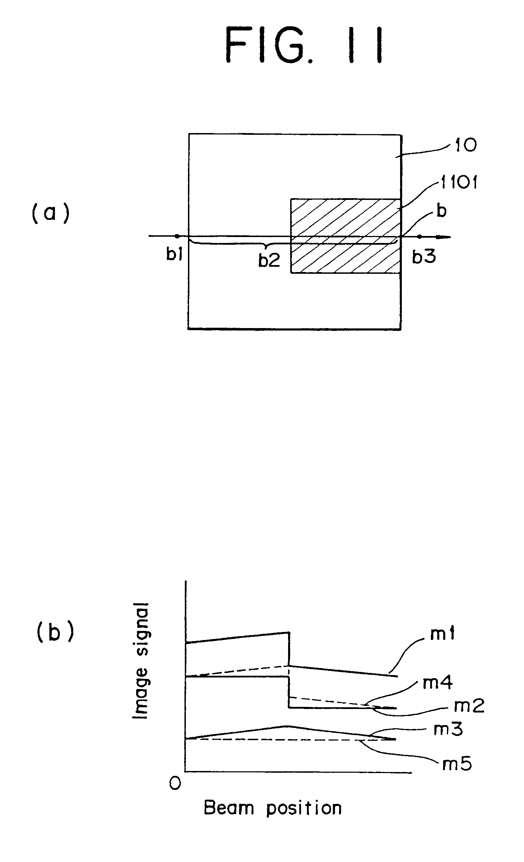

This situation will be described in detail by referring to Fig. 11 Fig. 11(a) shows the recording of, for example, an object 1101 having a uniform thickness, and Fig. 11(b) shows the relationship between the image signal obtained when the converting panel 10 is scanned with stimulating ray along the scanning line b and the beam position of the stimulating ray. In Fig. 11(b), the image signal obtained in practice scanning is shown by ml. On the other hand, the signal corresponding to the afterglow is a function of the image pattern recorded on the converting panel 10 and the time (beam position of the stimulating ray) as described above, and changes with time as shown by m3. The corrected (true) image signal m2 is obtained by subtracting the signal m3 corresponding to the afterglow from the image signal m1.

However, if the signal corresponding to the afterglow is detected at the position b1 or b3 of the scanning line b and this is regarded as the signal corresponding to the afterglow in the region b2 of the scanning line b (corresponding to m5), the corrected image signal obtained by subtracting m5, which has been regarded as the signal corresponding to the afterglow from the image signal m1 at the respective positions, is m4, which is different from the true image signal m2.

As described above, the fluorescent afterglow and the stimulation afterglow are functions of the image pattern recorded on the converting panel and of time, and therefore no precise correction can be made by detecting a signal corresponding to the afterglow only once at the maximum for each line of scanning in view of the change in afterglow which occurs in one line of scanning.

EP-A-0,129,801 describes a method of reading out a radiation image from a stimulable phosphor by scanning with stimulating rays, wherein the electric image signal of the image is obtained by subtracting the signal corresponding to the phosphor afterglow when the stimulating rays are not present on the sheet after the sheet has been scanned at least by one complete scan line from the signal corresponding to the signal obtained by scanning with the stimulating rays.

EP-A-0,144,963 describes a radiation image read-out apparatus which comprises a plurality of stimulating ray sources and a single light deflecting means such that the stimulating rays impinge upon different portions of a stimulable phosphor sheet. The stimulating ray sources are pulsewise tuned on at different timings from each other, so as to increase scanning speed.

The present invention seeks to provide a radiation image information reading method capable of obtaining a correct reproduced image by reducing the stimulation afterglow to obtain a correct image signal corresponding to the real image.

The present invention provides, as a first embodiment, a radiation image information reading method which comprises scanning a radiation image converting panel surface with a stimulating ray to irradiate said panel and thus obtain radiation image information stored on said radiation image converting panel, wherein the irradiation is interrupted for every one picture element.

The present invention also provides, as a second embodiment, a radiation image information reading method which comprises scanning a radiation image converting panel surface with a stimulating ray to irradiate said panel and thus information stored on said radiation image converting panel, wherein during the said scanning the stimulating ray is repeatedly interrupted and the difference between the image signals read during irradiation and no irradiation is used as the image information.

By these methods, the stimulation afterglow which is mixed during scanning reading of the radiation image converting panel and fluctuates during subscanning and main scanning is reduced to at least a practically permissible range. Both methods may be used in combination with each other.

According to a preferred embodiment of the present invention, during scanning the irradiation is repeatedly interrupted and the difference between image signals read during irradiation and no irradiation is used as the image information. In other words, correct radiation image information is obtained by applying correction within at least a practically permissible range by repeatedly interrupting an exciting light for the noise light which is mixed in during scanning reading of the radiation image converting panel and which fluctuates during progress of subscanning and main scanning.

Fig. 1(a) illustrates an irradiation line of a stimulating ray on a converting panel, Fig. 1(b) illustrates a modulated signal of a laser beam, Fig. 1(c) illustrates the laser output modulated by said modulated signal, and Fig. 1(d) illustrates the relationship between the stimulated emission emitted from the converting panel and afterglow ;

Fig. 2(a), (b) are proportions of irradiation and stopping of the stimulating ray ;

Fig. 3 is a graph showing reduction of the stimulation afterglow when the duty is varied ;

Fig. 4 is an analog circuit chart for determining the image signal ;

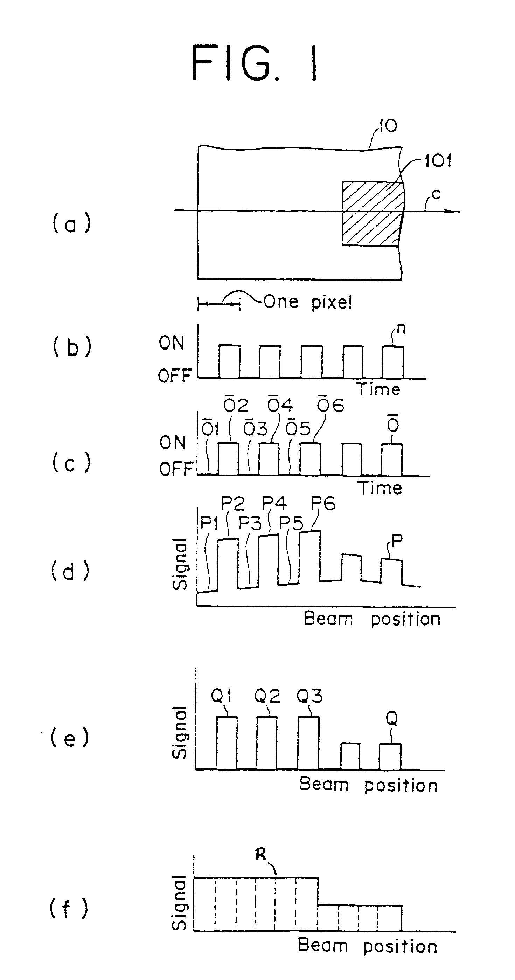

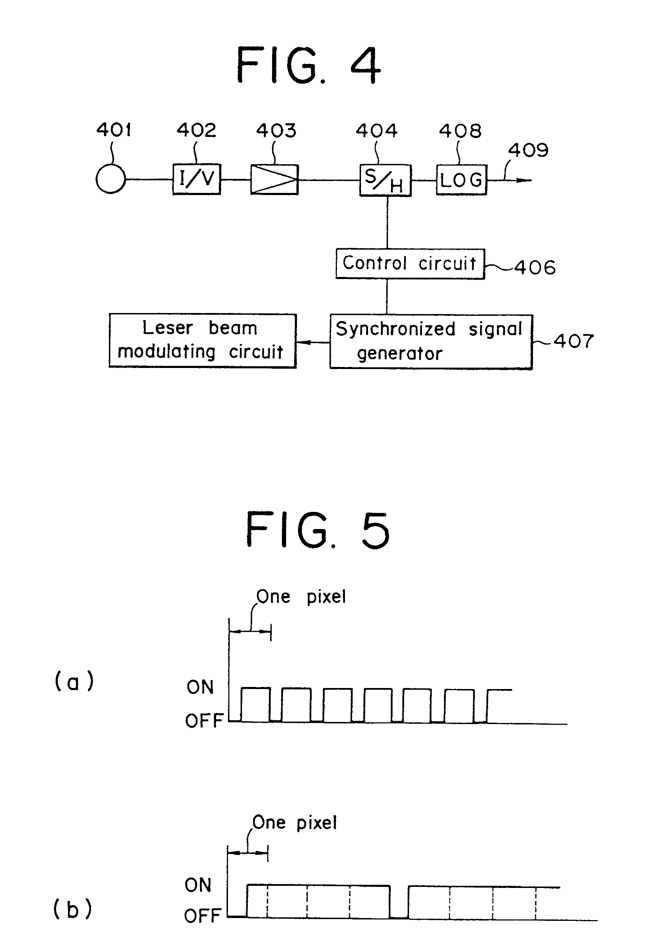

Fig. 1(e), (f) and Fig. 5 are illustrations to explain the present invention wherein noise light correction is carried out by irradiating intermittently the stimulating ray for scanning ;

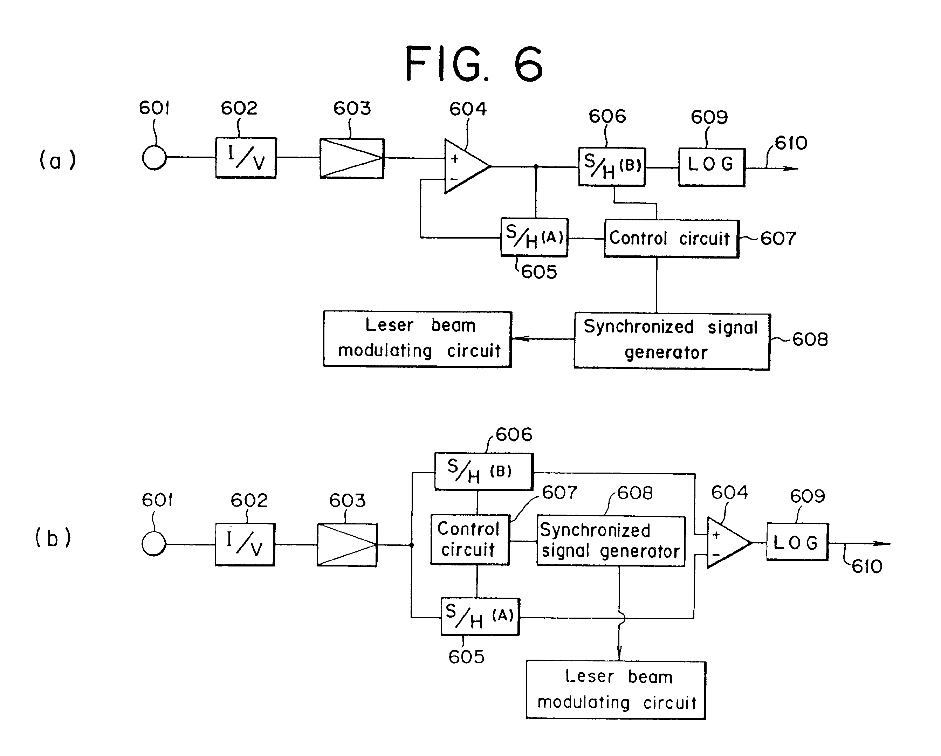

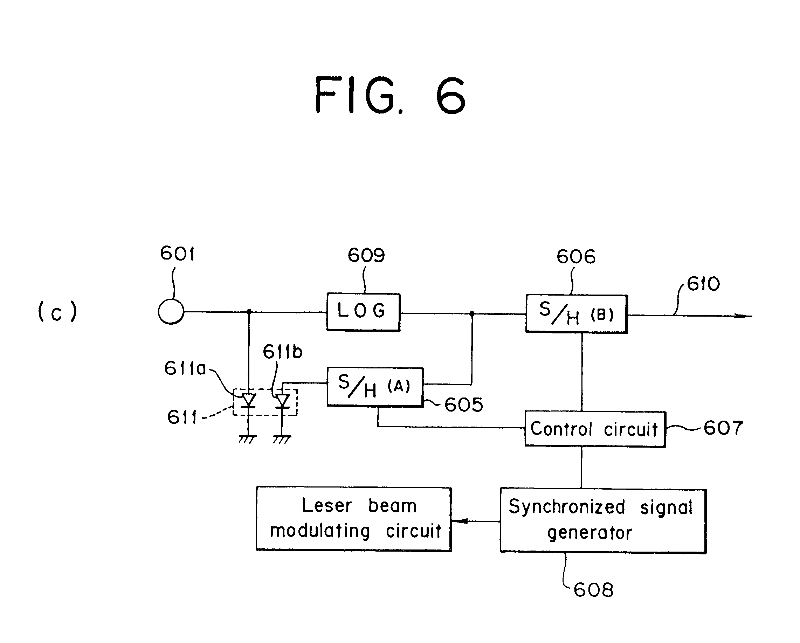

Fig. 6 is a block diagram showing a circuit embodying the present invention ;

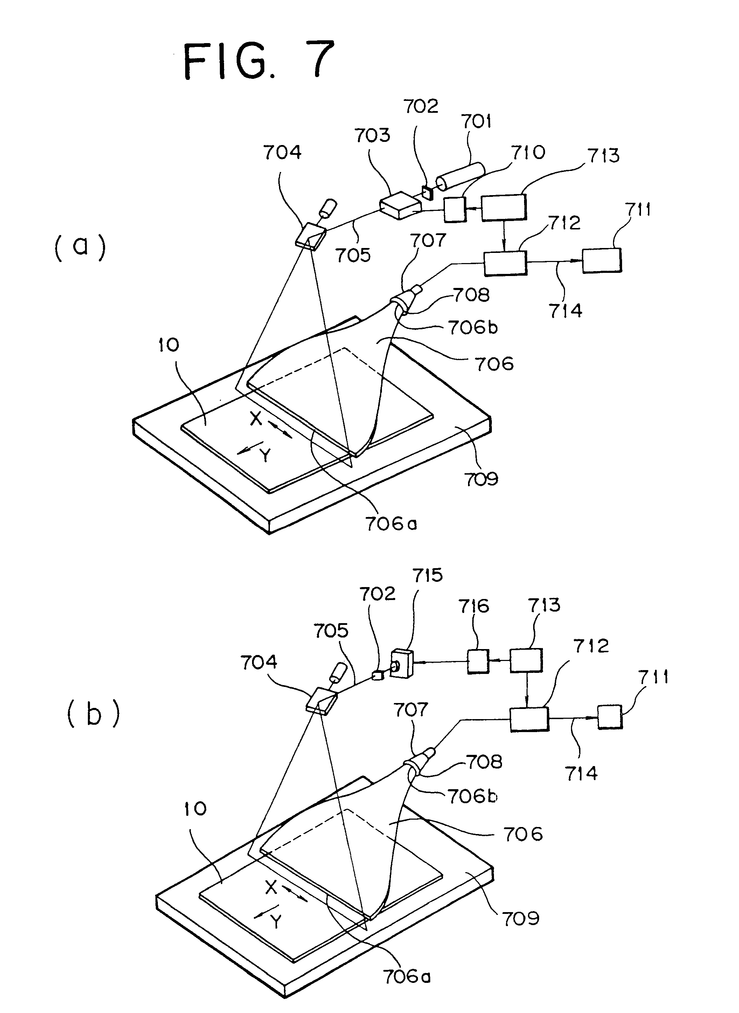

Fig. 7 is a shematic perspective view of an example of a radiation image reading apparatus according to the present invention ;

Fig. 8 is an illustration of a reading apparatus the used in prior art method ;

Fig. 9 is a graph showing the fluorescent afterglow by irradiation of radiation ;

Fig. 10 is a graph showing the attenuation curve of the stimulation afterglow by the stimulating ray;

Fig. 11 is a conceptional illustration showing the relationship between the intensity of stimulated emission provided by a radiation image and the intensity of the noise light and the light read in practice, and

Figs. 12(a) to (c) illustrate the relationship between the intensity of stimulated emission provided by a radiation image and the intensity of the noise light and the light read in practice.

The first embodiment of the present invention will be described in more detail by referring to Fig. 1.

In Fig. 1, (a) shows a recording of an object 101 having a uniform thickness as an image on a converting panel 10. c is the scanning line of an stimulating ray (laser beam). In Fig. 1(b), n is the modulation signal of laser beam which modulates the laser beam once per 1 picture element (pixel). In Fig. 1(c), $\overline{O}$ indicates the laser output modulated with the modulation signal n P in Fig. 1(d) is the signal obtained by photoelectric conversion of the stimulated emission and afterglow emitted from the converting panel 10 at the photodetector (e.g.a photomultiplier tube and P1, P3, P5,... are signals when the laser beam in interrupted (corresponding to the above laser outputs $\overline{O1}$, $\overline{O3}$, $\overline{O5}$,...), which are signals corresponding to the afterglow quantities. P2, P4, P6,... are image signals when laser beam in not interrupted (corresponding to the above laser outputs $\overline{O2}$, $\overline{O4}$, $\overline{O6}$, ...), which are signals in which signals corresponding to afterglow quantities are added to the true image signals.

In the same Figure, of the afterglow quantities the stimulation afterglow quantity is lowered during the interruption of the stimulating ray, and therefore the stimulation afterglow level during the irradiation period is remarkably reduced as compared with the case when the stimulating ray is continuoulsy irradiated. For this reason, when the method of the present invention is applied to a converting panel using RbBr : T1 as the stimulable phosphor shown in Fig. 12, if the ratio of irradiation : no irradiation of the modulation of the laser light is 1 : a, for example, the ratio of the true image signal to the signal corresponding to the stimulation afterglow (SN ratio) is improved to about 700 : 1(57 dB) at the portion corresponding to b" of the converting panel 10 in Fig. 12.

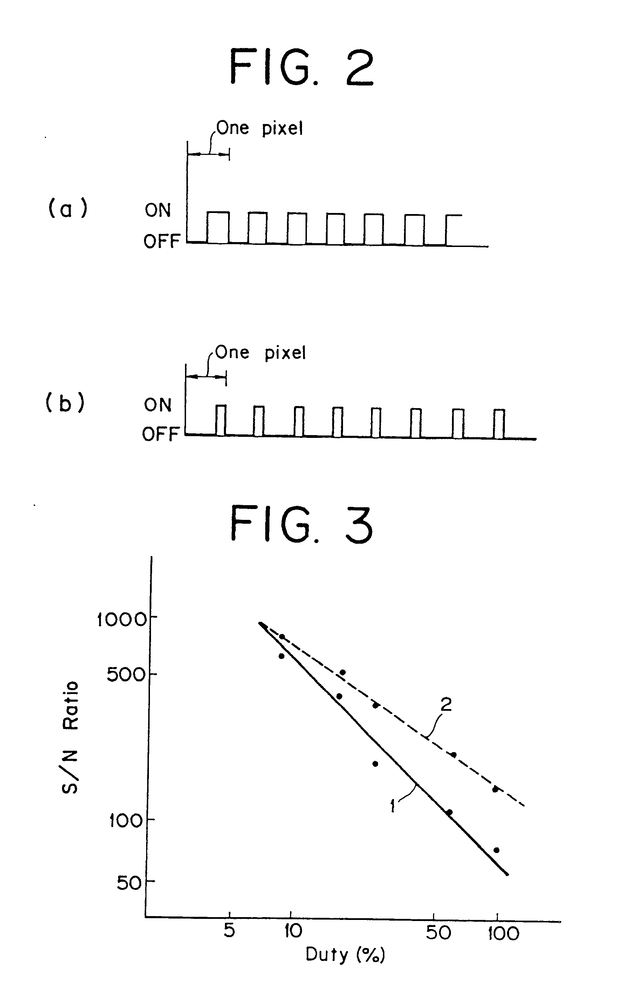

The ratio of the irradiation time of laser beam to non-irradiation time in one picture element is not required to be 1 : 1 as the practically permissible range as shown in Fig. 2(a), but the stopping time is preferably longer as shown in the Fig. 2(b).

Fig. 3 shows how the SN ratio can be improved when the ratio of the irradiation time of the laser beam to the scanning time for each picture element of the same laser beam (duty) is changed in the method of the present invention. In this Figure, 1 shows an example of converting panel using the above thallium-activated rubidium bromide phosphor (RbBr : T1), and 2 shows an example of converting panel using europium-activated barium fluoride bromide (BaFBr : Fu). When the non-irradiation time is shorter relative to the scanning time for ead picture element, the improvement of the SN ratio becomes smaller. Therefore it is preferred that the irradiation time is 80% or less of the scanning time for each picture element. Also, the percentage of the non-irradiation time should be as much as possible within the range capable of reading the signals. However, it is preferred that the non-irradiation time should be set so that the irradiation time of the laser beam is not shorter than the correspondence time to the laser beam of the stimulable phosphor.

The stimulable phosphor employed in the present invention exhibits stimulated emission corresponding to the dose of the first light or high energy radiation by optical, thermal, mechanical or electrical stimulation (stimulation) after irradiation of the first light or high energy radiation, and practically a phosphor exhibiting stimulated emission by a stimulating ray having a wavelength of 300 nm or longer is preferred. Particularly, a phosphor having a large responding stimulated emission speed to the stimulating ray is preferred, and a phosphor exhibiting stimulated emission effectively to a light within the wavelength of light provided by a semiconductor laser is more preferred. As the phosphor, there may be mentioned, for example, phosphor represented by SrS : Ce, Sm, SrS : Eu, Sm, $La_2O_2S$ : Eu, Sm and (Zn, Cd)S : Mn, X (wherein X is a halogen) as disclosed in U.S, Patent no. 3,859,527. Also, ZnS : Cu, Pb phosphors as disclosed in Japanese Unexamined Patent Publication no. 12142/1980 ; barium aluminate phosphors represented by the formula $BaO \cdot xAl_2O_3$ : Eu (wherein $0.8 \leq x \leq 10$) and alkaline earth metallosilicate type phosphors represented by the formula $M^{II}O \cdot xSiO_2$ : A (wherein $M^{II}$ is Mg, Ca, Sr, Zn, Cd or Ba ; A is at least one of Ce, Tb, Eu, Tm, Pb, Tl, Bi and Mn ; and $0.5 \leq x < 2.5$) may be employed.

Additional examples of phosphors may include, as disclosed in Japanese Unexamined Patent Publication No. 12143/1980, alkaline earth fluorinated halide phosphors represented by the following formula :

$$(Ba_{1-x-y}Mg_xCa_y)FX : eEu^{2+}$$

(wherein X is at least one of Br, Cl and I ; and each of x, y and e is a number satisfying the conditions $0 < x + y \leq 0.6$ ; $xy \neq 0$ and $10^{-6} \leq e \leq 5 \times 10^{-2}$) ; phosphors as disclosed in Japanese Unexamined Patent Publication No. 12144/1980 which corresponds to U.S. Patent No. 4,236,078 :

$$LnOX : xA$$

(wherein Ln represents at least one of La, Y, Gd and Lu ; X represents Cl and/or Br ; A represents Ce and/or Tb ; and $0 < x < 0.1$) ; those as disclosed in Japanese Unexamined Patent Publication No. 12145/1980 :

$$(Ba_{1-x}M^{II}x)FX : yA$$

(wherein $M^{II}$ represents at least one of Mg, Ca, Sr, Zn and Cd ; X represents at least one of Cl, Br and I ; A represents at least one of Eu, Tb, Ce, Tm, Dy, Pr, Ho, Nd, Yb and Er ; $0 \leq x \leq 0.6$ ; and $0 \leq y \leq 0.2$) ; those as disclosed in Japanese Unexamined Patent Publication No. 84389/1980 :

$$BaFX : xCe, yA$$

(wherein X is at least one of Cl, Br and I ; A is at least one of In, Tl, Gd, Sm and Zr ; $0 < x \leq 2 \times 10^{-1}$ ; and $0 < y \leq 5 \times 10^{-2}$) ; rare earth element activated divalent metal fluoride phosphors as disclosed in Japanese Unexamined Patent Publication No. 160078/1980 :

$$M^{II}FX, xA : yLn$$

(wherein $M^{II}$ is at least one of Mg, Ca, Ba, Sn, Zn and Cd ; A is at least one of BeO, MgO, CaO, SrO, BaO, ZnO, $Al_2O_3$, $Y_2O_3$, $La_2O_3$, $In_2O_3$, $SiO_2$, $TiO_2$, $ZrO_2$, $GeO_2$, $SnO_2$, $Nb_2O_5$, $Ta_2O_5$ and $ThO_2$ ; Ln is at least one of Eu, Tb, Ce, Tm, Dy, Pr, Ho, Nd, Yb, Er, Sm and Gd ; X is at least one of Cl, Br and I ; $5 \times 10^{-5} \leq x \leq 0.5$ ; and $0 < y \leq 0.2$) ; those as disclosed in Japanese Unexamined Patent Publication No. 148285/1982 :

$$xM_3(PO_4)_2 \cdot NX_2 : yA$$

$$M_3(PO_4)_2 : yA$$

(wherein each of M and N represents at least one of Mg, Ca, Sr, Ba, Zn and Cd ; X represents at least one of F, Cl, Br and I ; A represents at least one of Eu, Tb, Ce, Tm, Dy, Pr, Ho, Nd, Yb, Er, Sb, Tl, Mn and Sn ; and x and y are integers satisfying the conditions $0 < x \leq 6$ and $0 \leq y \leq 1$) ;

$$nReX_3 \cdot mAX'_2 : xEu$$

$$nReX_3 \cdot mAX'_2 : xEu, ySm$$

(wherein Re represents at least one of La, Gd, Y and Lu ; A represents at least one of alkaline earth metals Ba, Sr and Ca ; X and X' each represent at least one of F, Cl and Br ; x and y are integers satisfying the conditions $1 \times 10^{-4} < x < 3 \times 10^{-1}$ and $1 \times 10^{-4} < y < 1 \times 10^{-1}$ ; and $1 \times 10^{-3} < n/m < 7 \times 10^{-1}$) and

$$M^{I}X \cdot aM^{II}X'_2 \cdot bM^{III}X''_3 : cA$$

(wherein $M^{I}$ is at least one alkali metal selected from Li, Na, K, Rb and Cs ; $M^{II}$ is at least one divalent metal selected from Be, Mg, Ca, Sr, Ba, Zn, Cd, Cu and Ni ; $M^{III}$ is at least one trivalent metal selected from Sc, Y, La, Ce, Pr, Nd, Pm, Sm, Eu, Gd, Tb, Dy, Ho, Er, Tm, Yb, Lu, Al, Ga and In ; X, X' and X'' are each at least one halogen selected from F, Cl, Br and I ; A is at least one metal selected from Eu, Tb, Ce, Tm, Dy, Pr, Ho, Nd, Yb, Er, Gd, Lu, Sm, Y, Tl, Na, Ag, Cu and Mg ; $0 \leq a < 0.5$ ; $0 \leq b < 0.5$ ; and $0 < c \leq 0.2$) (alkali halide phosphors). Of the above stimulable phoshors, alkaline earth fluoride type phosphors and alkali halide type phosphors are preferred because they have a tast emission responding speed to the exciting light and good wavelength matching with the wavelength of light provided by a semiconductor laser.

However, the stimulable phosphor is not limited to those described above ; any phosphor which can exhibit stimulated emission when irradiated with a stimulating ray after irradiation of radiation may be useful.

Fig. 4 shows an example of an analog circuit for determining image signals.

In this Figure, the signal photoelectrically converted by a photodetector 401 is converted to a voltage by a current-voltage converter 402, then amplified by an amplifier 403 and inputted into a sample hold circuit 404. The output from the sample hold circuit 404 is outputted after logarithmic conversion by a logarithmic converter 408.

The synchronized signal generating device 407 synchronises the timing of modulation (irradiation) of the stimulating paser beam with sample holding by the sample holding circuit 404.

The control circuit 406 and the sample hold circuit 404 detect the output signal from the amplifier 403 synchronously during irradiation of the laser beam by the synchronized signal from the synchronized signal generating device 407 to maintain the signal during interruption of laser beam so as to interpolate it.

Of the image signals obtained by irradiating the laser beam on the converting panel, the signal corresponding to the afterglow is reduced by modulation of the laser beam, and therefore the image signal 409 taken out through the logarithmic converter 408 is correct and corresponds to the real image.

The sample hold circuit 404 interpolates the images signal during interruption of the laser beam, and is not necessarily provided. The sample hold circuit 404 may be located either before or after the logarithmic converter 408, but it is preferably located before the logarithmic converter in view of the frequency characteristic thereof.

A for the second embodiment of the present invention, description is now made about the method in which during scanning the irradiation is repeatedly; interrupted, and the difference in image signals read during irradiation and no irradiation of said stimulating ray is used as the image information.

In Fig. 1(e), Q1, Q2, Q3,... are image signals corrected by subtracting the signals corresponding to afterglow quantities (P1, P3, P5,...) from the image signal (P2, P4, P6,...), respectively, and they are approximate to the true image signals.

R in Fig. 1(f) represents a signal when the laser beam is interrupted interpolated on the base of the corrected true image signals (Q1, Q2, Q3,...).

Processing of the signal of Fig. 1(e) or Fig. 1(f) may be practiced for analog signals as such or after conversion to digital signals. In the case of digital signals, no real time processing is required, but they can be stored in memory to be processed later at any desired time.

Also, the ratio of the laser irradiation time to non-irradiation time in one picture element is not required to be 1 : 1 as shown in Fig. 1(c) but either one may be shorter with the non-irradiation time being preferably shorter see for example, Fig. 5(a). Practically, the laser irradiation time is 10% or more of the scanning time for every picture element. Further, as shown in Fig. 5(b), the signal corresponding to the afterglow quantity does not have to be determined for each picture element ; it can be determined twice or more per one main scanning. The optimal number of determinations varies depending on the afterglow quantity, rapidness of attenuation and scanning speed of laser beam.

The fluorescent afterglow quantity and stimulation afterglow quantity varying from time to time as described above can be constantly correctly detected to remove the signals corresponding to said afterglow quantity from the image signals, and therefore correct signals corresponding to real images can be obtained. Since interference between image signals caused by the stimulation afterglow can be removed by correcting image signals for each picture element, the sharpness of the image can be improved.

Figs. 6(a), (b) and (c) show an example of an analog circuit for reducing the signals corresponding to afterglow quantity from image signals.

In Fig. 6(a), the signal photoelectrically converted by the photodetector 601 is converted to a voltage by the current-voltage converter 602, then amplified by the amplifier 603 and inputted into the (+) side of the differential amplifier 604. At the output of the differential amplifier, the sample hold circuits (A) 605 and (B) 606 are located, and on the (−) side of the differential amplifier 604, signals from the sample hold circuit (A) 605 are inputted. The output from the sample hold circuit (B) 606 is subjected to logarithmic conversion by the logarithmic converter 609.

The synchronized signal generator 608 synchronizes the timing of modulation of the laser beam (irradiation and non-irradiation) with that of sample holding by sample hold circuits (A) and (B).

The control circuit 607 and the sample hold circuit (A) 605 act synchronously during interruption of the laser beam by the synchronized signal from the synchronized signal generator 608 to determine the voltage inputted into the (−) side of the differential amplifier 604 so that the output signal from the differential amplifier 604 is zero and maintains that voltage until the next interruption of the laser beam. The control circuit 607 and the sample hold circuit (B) 606 act synchronously during irradiation of the laser beam by the synchronized signal from the synchronized signal generator 608 to detect the output signal from the differential amplifier 604, and maintains that signal so as to interpolate the signal during interruption of the laser beam.

Of the image signals obtained by thus irradiating the laser beam on the converting panel, the signals corresponding to afterglow quantity are reduced by voltage inputtted on the (−) side of the differential amplifier 604 from the sample hold circuit (A)605, and therefore the image signal 610 taken out through the logarithmic converter 609 becomes correct and corresponds to the real image.

The sample hold circuit (B) 606 interpolates the image signal during interruption of the laser beam and it is not necessarily provided. The sample hold circuit (B) may be located either before or after the logarithmic converter 609, but it is preferably located before the logarithmic converter 609 in view of the frequency characteristic thereof.

In Fig. 6(b), the signal photoelectrically converted by the photodetector 601 is converted to a voltage by the current-voltage converter 602 and thereafter amplified by the amplifier 603.

The output signal from the amplifier 603 is inputted through the sample hold circuits (A) 605 and B (606) into the (−) side and (+) side of the differential amplifier 604, respectively. The output from the differential amplifier 604 is subjected to logarithmic conversion by the logarithmic converter 609.

The synchronized signal generator 608 synchronizes the timing of modulation of the laser beam with that of sample holding by the sample hold circuits.

The control circuit 607 and the sample hold circuit (A) 605 act synchronously during interruption of the laser beam by the synchronized signal from the synchronized signal generator 608 to detect the signal corresponding to afterglow quantity, and maintain it until the next interruption of the laser beam. The control circuit 607 and the sample hold circuit (B) 606 act synchronously during irradiation of the laser beam by the synchronized signal from the synchronized signal generator to detect the image signal containing the signal corresponding to afterglow quantity, and maintain it so as to interpolate the signal during interruption of the laser beam.

The sample hold circuit (B) 606 interpolates the image signal during interruption of the laser beam, and is not required to be positioned as shown in Fig. 6(b) ; it may be located after the differential amplifier 604 or after the logarithmic converter 609. It is not necessarily provided.

Thus, of the image signals obtained by irradiation of the laser beam on the converting panel, the signal corresponding to afterglow quantity is maintained by the sample hold circuit (A) 605 and reduced by inputting it on the (-) side of the differential amplifier 604. Therefore the image signal 610 taken out through the logarithmic converter 609 is correct and corresponds to the real image.

In Fig. 6(c), the signal photoelectrically converted by the photodetector 601 is connected to the logarithmic converter 609 and the photodiode side 611a of the photocoupler 611.

When a signal is inputted into the light emitting diode side 611b of the photocoupler 611, the light emitting diode emits light and the current signal from the photodetector 601 flows partially to the photodiode side corresponding to the signal level, with the remainder being inputted to the logarithmic converter 609. The output from the logarithmic converter 609 is inputted to the light emitting diode side of the photocoupler 611 through the sample hold circuit (A) 605 and at the same time outputted as the image signal through the sample hold circuit (B) 606. The control circuit 607 and the sample hold circuit (A) 605 act synchronously during interruption of the laser beam by the synchronized signal from the synchronized signal generator 608 to detect the signal corresponding to the afterglow quantity to determine the voltage to be inputted to the light emitting diode side of the photocoupler 611 so that the output signal from the logarithmic converter 609 is zero and maintains that voltage until the next interruption of the laser beam. The control circuit and the sample hold circuit (B) act synchronously during irradiation of the laser beam by the synchronized signal from the synchronized signal generator 608 to detect the output signal from the logarithmic converter 609, and maintains it so as to interpolate the signal during interruption of the laser beam. The sample hold circuit (B) 606 interpolates the image signal during interruption of the laser beam, and it is not required to be positioned as shown in Fig. 6(c) it is not necessarily provided.

Of the image signals obtained by thus irradiating the laser beam on the converting panel, the signal corresponding to afterglow quantity is earthed by passing it through the photodiode 611a of the photocoupler 611, and the image signal 610 outputted through the logarithmic converter and the sample hold circuit (B) is correct and corresponds to the real image.

An example of a radiation image information reading apparatus is now described, which performs successively noise light correction by scanning intermediately the excitation laser beam.

Fig. 7(a) is an example in which intermittent actuations of irradiation and non-irradiation of the excitation laser beam are performed by an acoustic optical modulator (AOM), and Fig. 7(b) is an example in which direct modulation is applied on a semiconductor laser.

The method of the present invention is not limited to the above-mentioned two apparatuses.

In Fig. 7(a), 701 is a laser beam source, 703 an acoustic optical modulator (AOM) for modulating the laser beam 705 from the laser beam source 701, and 710 a modulation circuit for driving the AOM. The laser beam 705 is modulated at the AOM 703 by the modulating signal from the modulating circuit 710 (irradiation-non irradiation), and then irradiated on the converting panel 10 by reflecting it in the amplitude direction (X direction) while being vibrated at a constant amplitude by, for example, a galvanometer mirror 704.

During this operation, the converting panel 10 is moved perpendicularly to the amplitude direction, so that the whole panel 10 is scanned to effect stimulated emission on the scanning line.

The stimulated emission is condensed at the light receiving surface 706a of a condenser 706 to reach the transmission surface 706b and separated by a filter 708 from the laser beam, and thereafter photoelectrically converted by the photodetector 707.

712 is a signal detecting-calculating circuit, including the circuit shown in Fig. 6, for detecting the electrical signal from the above photodetector and determining the corrected (true) image signal, and 711 is an image displaying apparatus for displaying the image signal from the signal detecting-calculating circuit 712 as a visible image.

The electrical signal from the photodetector is inputted into the signal detecting-calculating circuit 712, converted to a corrected (true) image signal by reducing the signal corresponding to the afterglow quantity during interruption of the laser beam 705 from the image signal during irradiation of the laser beam 705 synchronously with modulation (irradiation-non irradiation) of the laser beam 705 by the synchronized signal from the synchronized signal generator 713, and displayed as a visible image by the image displaying apparatus 711.

In Fig. 7(b), 715 is a semiconductor laser, and 716 is a modulation circuit for the semiconductor laser, which is the same as in Fig. 7(a) except for modulating directly the semiconductor laser. The semiconductor laser is convenient for miniaturization of the apparatus because it can modulate directly the laser beam. The semiconductor laser can add more accurate corrections to image signals because there is no leak of the laser beam during interruption.

As for synchronization, modulation and correction reference may be made to the circuit example described in Fig. 6.

According to the method of this embodiment, if the fluorescent afterglow is negligible after a long time after recording radiation image information onto a converting panel, the signal corresponding to the afterglow quantity is only the stimulation afterglow.

In contrast, if the stimulation afterglow is negligible because of the slow speed of the stimulating ray scanning over the converting panel, the signal corresponding to the afterglow quantity is only the fluorescent afterglow.

According to the method of the present invention, even if there is noise light other than the fluorescent afterglow and the stimulation afterglow, its correction can be made simultaneously with correction of the above afterglows.

In the method of the present invention, the intensity of the stimulating ray in pulses as described above may be detected and the radiation image information may be corrected based on said detected information. By doing so, deterioration of the radiation image caused by fluctuation of the stimulating ray with time can be avoided.

Having described in the above embodiments an example in which scanning over a converting panel with stimulating ray is performed reciprocally, the same description is applicable when scanning is performed in only one direction by blanking (of the return path).

Further, in the embodiments described above, a stimulable phosphor has been used as the converting panel, but the method of the present invention can be also utilized in the method as shown in, for example, Japanese Unexamined Patent Publication No. 31219/1979, in which a photoconductive member is used as the converting panel and is read with an exciting light by utilizing electrostatic latent images.

By use of the present invention, the noise caused by fluorescent afterglow and stimulation afterglow can be removed simply and correctly.

Also, by use of the present invention, noise caused by, for example stray light from outside the apparatus or the laser beam, can be removed simply and correctly.

Further, by use of the present invention, deterioration of the sharpness of the image caused by stimulation afterglow can be improved.

As described above, according to the present invention, a visible image which is correct and which has good reproductibility and corresponds to the real image, and also has good sharpness, can be obtained, whereby diagnosis with high reliability by a radiation image is rendered possible.

## Claims

1. A radiation image information reading method which comprises scanning a radiation image converting panel surface with a stimulating ray to irradiate said panel and thus obtain radiation image information stored on said radiation image converting panel, wherein the irradiation is interrupted for every one picture element.

2. A radiation image information reading method which comprises scanning a radiation image converting panel surface with a stimulating ray to irradiate said panel and thus obtain radiation image information stored on said radiation image converting panel, wherein during said scanning the stimulating ray is repeatedly interrupted, and the difference between the image signals read during irradiation and no irradiation is used as the image information.

3. A method according to claim 2, wherein said irradiation is interrupted for every one picture element.

4. A method according to any one of claims 1 to 3, wherein the irradiation time of said stimulating ray is 80% or less of the scanning time for every picture element.

5. A method according to any one of claims 1 to 4, wherein the irradiation time of said stimulating ray is 10% or more of the scanning time for every picture element.

## Ansprüche

1. Verfahren zum Auslesen von Strahlungsbildinformation, bei dem eine Strahlungsbild-Umwandlungstafelfläche mit einem Anregungsstrahl abgetastet wird, um die Tafel zu bestrahlen und damit die auf der Strahlungsbild-Umwandlungstafel gespeicherte Strahlungsbildinformation zu gewinnen, dadurch gekennzeichnet, daß die Bestrahlung für jeweils ein Bildelement unterbrochen wird.

2. Verfahren zum Auslesen von Strahlungsbildinformation, bei dem eine Strahlungsbild-Umwandlungstafelfläche mit einem Anregungsstrahl abgetastet wird, um die Tafel zu bestrahlen und damit die auf der Strahlungsbild-Umwandlungstafel gespeicherte Strahlungsbildinformation zu gewinnen, dadurch gekennzeichnet, daß während der Abtastung der Anregungsstrahl wiederholt unterbrochen und die Differenz zwischen den während der bzw. mit Bestrahlung und ohne Bestrahlung ausgelesenen Bildsignale als Bildinformation genutzt wird.

3. Verfahren nach Anspruch 2, dadurch gekennzeichnet, daß die Bestrahlung für jeweils ein Bildelement unterbrochen wird.

4. Verfahren nach einem der Ansprüche 1 bis 3, dadurch gekennzeichnet, daß die Bestrahlungszeit des Anregungsstrahls 80% oder weniger der Abtastzeit für jedes Bildelement beträgt.

5. Verfahren nach einem der Ansprüche 1 bis 4, dadurch gekennzeichnet, daß die Bestrahlungszeit des Anregungsstrahls 10% oder mehr der Abtastzeit für jedes Bildelement beträgt.

## Revendications

1. Procédé de lecture d'une information d'image de rayonnement, comportant une étape de balayage d'une surface de panneau de conversion d'image de rayonnement à l'aide d'un rayon de stimulation pour irradier ledit panneau et ainsi obtenir une information d'image de rayonnenent mémorisée sur ledit panneau de conversion d'image de rayonnement, dans lequel l'irradiation est interrompue pour chaque élément d'image.

2. Procédé de lecture d'information d'image de rayonnement, comportant une étape de balayage d'une surface de panneau de conversion d'image de rayonnement à l'aide d'un rayon de stimulation pour irradier ledit panneau et ainsi obtenir une information d'image de rayonnement mémorisée sur ledit panneau de conversion d'image de rayonnement, dans lequel, durant ladite étape de balayage, le rayonnement de stimulation est interrompu de façon répétée, et la différence entre les signaux d'image lus durant une irradiation et durant une absence d'irradiation est utilisée en tant qu'information d'image.

3. Procédé selon la revendication 2, dans lequel ladite irradiation est interrompue pour chaque élément d'image.

4. Procédé selon l'une quelconque des revendications 1 à 3, dans lequel le temps d'irradiation dudit rayonnement de stimulation est 80% ou moins du temps de balayage pour chaque élément d'image.

5. Procédé selon l'une quelconque des revendications 1 à 4, dans lequel le temps d'irradiation dudit rayonnement de stimulation est 10% ou plus du temps de balayage pour chaque élément d'image.

# FIG. 1

(a)

One pixel

(b)
ON
OFF
Time

(c)
ON
OFF
Time

(d)
Signal
Beam position

(e)
Signal
Beam position

(f)
Signal
Beam position

# FIG. 2

( a )

One pixel

ON
OFF

( b )

One pixel

ON
OFF

# FIG. 3

# FIG. 4

401 402 403 404 408 409

I/V ▷ S/H LOG →

Control circuit ⌐406

Leser beam modulating circuit ← Synchronized signal generator ⌐407

# FIG. 5

One pixel

(a)

ON
OFF

One pixel

(b)

ON
OFF

# FIG. 6

(a)

601 ○ — 602 I/V — 603 — 604 +/− — 605 S/H (A) — 606 S/H (B) — 607 Control circuit — 608 Synchronized signal generator — 609 LOG — 610

Leser beam modulating circuit

(b)

601 ○ — 602 I/V — 603 — 604 +/− — 605 S/H (A) — 606 S/H (B) — 607 Control circuit — 608 Synchronized signal generator — 609 LOG — 610

Leser beam modulating circuit

# FIG. 6

(c)

601 · 609 · 606 · 610

LOG — S/H (B)

611b
611a
611 · S/H (A) · 605

Control circuit · 607

Leser beam modulating circuit ← Synchronized signal generator

608

EP 0 215 681 B1

# FIG. 7

(a)

(b)

# FIG. 8

# FIG. 9

# FIG. IO

# FIG. 11

(a)

(b)

# FIG. 12

(a)

(b)

(c)

Beam position